(19) Europäisches Patentamt
European Patent Office
Office européen des brevets

(11) **EP 3 827 168 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **19749619.3**

(22) Anmeldetag: **24.07.2019**

(51) Internationale Patentklassifikation (IPC):
**F03D 13/10** (2016.01)       **E04B 1/98** (2006.01)
**F03D 13/20** (2016.01)       **E04H 9/02** (2006.01)
**F16F 7/10** (2006.01)

(52) Gemeinsame Patentklassifikation (CPC):
**F03D 13/10; E04H 9/0215; F03D 13/20; F16F 7/1005;** F05B 2260/964; Y02E 10/72; Y02E 10/728

(86) Internationale Anmeldenummer:
**PCT/EP2019/069982**

(87) Internationale Veröffentlichungsnummer:
**WO 2020/020980 (30.01.2020 Gazette 2020/05)**

(54) **DEMONTAGEVERFAHREN UND DEMONTAGESYSTEM FÜR EINEN SCHWINGUNGSDÄMPFER EINES WINDENERGIEANLAGENTURMS**

UNMOUNTING METHOD AND UNMOUNTING SYSTEM FOR A VIBRATION DAMPER OF A WIND POWER PLANT TOWER

PROCÉDÉ DE DEMONTAGE ET SYSTÈME DE DEMONTAGE POUR UN AMORTISSEUR DE VIBRATIONS D'UNE TOUR D'INSTALLATION D'ÉNERGIE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2018   DE 102018005852**

(43) Veröffentlichungstag der Anmeldung:
**02.06.2021   Patentblatt 2021/22**

(73) Patentinhaber: **Siemens Gamesa Renewable Energy Service GmbH
20097 Hamburg (DE)**

(72) Erfinder:
• **SCHELLER, Jörn
24768 Rendsburg (DE)**
• **NEUMANN, Niklas
22417 Hamburg (DE)**
• **SAMUELSEN, Olaf
24887 Hünning (DE)**

(74) Vertreter: **Glawe, Delfs, Moll Partnerschaft mbB von Patent- und Rechtsanwälten Postfach 13 03 91
20103 Hamburg (DE)**

(56) Entgegenhaltungen:
EP-A1- 3 048 299       WO-A1-2014/040598
WO-A1-2018/059638       DE-A1-102011 109 070

**Beschreibung**

Die Erfindung betrifft ein Montageverfahren und ein Montagesystem für einen Schwingungsdämpfer eines Turms einer Windenergieanlage.

Beim Errichten einer Windenergieanlage wird üblicherweise so vorgegangen, dass in einem ersten Schritt ein Turm der Windenergieanlage errichtet wird und in einem zweiten Schritt eine Gondel mit einem oberen Ende des Turms verbunden wird. Die Gondel hat ein erhebliches Gewicht, so dass das Schwingungsverhalten des Turms ohne Gondel ein anderes ist als das Schwingungsverhalten des Turms mit Gondel. Der Turm ist für einen Betrieb mit Gondel konstruiert. Solange die Gondel nicht an den Turm angeschlossen ist, gibt es ein Risiko, dass der Turm durch den Wind in unerwünschte Schwingungen versetzt wird.

Um zu verhindern, dass der Turm Schaden nimmt in dem Zwischenzustand, in dem die Gondel noch nicht montiert ist, kann ein Schwingungsdämpfer verwendet werden, der den Schwingungen des Turms entgegenwirkt. Im Stand der Technik sind verschiedene Varianten von Schwingungsdämpfern beschrieben worden, WO 2008/145122 A1, DE 20 2016 005 517 U1, WO 2008/071428 A1, WO 2013/017244 A2. Aus der WO 2014/040598 A1 bekannt ist ein Schwingungsdämpfer für einen Turm einer Windenergieanlage, bei dem ein mit einem Material gefüllter Sack an der Wand des Turms aufgehängt ist.

Wenn die Gondel mit dem Turm verbunden ist, gibt es von oben keinen freien Zugang mehr zu dem Innenraum des Turms. Es hat sich als nicht ganz einfach herausgestellt, den Schwingungsdämpfer, der nach dem Anbringen der Gondel nicht mehr benötigt wird, aus dem Innenraum des Turms zu entfernen.

Der Erfindung liegt die Aufgabe zugrunde, ein Demontageverfahren und ein Demontagesystem vorzustellen, mit denen der Schwingungsdämpfer einfacher aus dem Turm entfernt werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Montageverfahren wird der Schwingungsdämpfer ausgehend von einem Nutzzustand in einen Transportzustand gebracht. Im Nutzzustand ist der Schwingungsdämpfer mit einem Strukturbauteil des Turms verbunden, so dass eine Dämpfermasse des Schwingungsdämpfers in eine Bewegung versetzt werden kann, bei der sich der Abstand zwischen der Dämpfermasse und einer Zentralachse des Turms ändert. Der Schwingungsdämpfer wird in einen Transportzustand gebracht, indem der Schwingungsdämpfer relativ zu dem Nutzzustand gekippt wird.

Die Erfindung hat erkannt, dass ein Schwingungsdämpfer, bei dem eine Dämpfermasse so bewegt wird, dass der Abstand zwischen der Dämpfermasse und einer Zentralachse des Turms sich ändert in der Regel eine beträchtliche horizontale Ausdehnung hat. Die in dem Turm vorgesehenen Öffnungen, um eine Last nach oben oder unten zu transportieren, sind meist kleiner als die horizontale Ausdehnung des Schwingungsdämpfers. Mit der Erfindung wird ein Transportzustand für den Schwingungsdämpfer vorgeschlagen, in dem der Schwingungsdämpfer relativ zu dem Nutzzustand gekippt ist. Ein solches Kippen zwischen dem Nutzzustand und dem Transportzustand entspricht nicht der üblichen Vorgehensweise beim Bewegen von Lasten. Normalerweise wird eine Last, die beispielsweise vom Erdboden zum oberen Ende einer Windenergieanlage transportiert wird, bereits vor dem Anheben so ausgerichtet, dass sie am oberen Ende der Windenergieanlage ohne weitere Kippvorgänge montiert werden kann. Kippvorgänge in großer Höhe sind allgemein unerwünscht.

Der Schwingungsdämpfer umfasst einen Rahmen, der im Nutzzustand mit dem Strukturbauteil des Turms verbunden ist. Die Dämpfermasse ist so relativ zu dem Rahmen gelagert, dass die Dämpfermasse sich im Betrieb des Schwingungsdämpfers relativ zu dem Rahmen bewegt. Der Schwingungsdämpfer kann eine Rotationsachse umfassen, so dass die Dämpfermasse im Betrieb des Schwingungsdämpfers eine rotierende Bewegung relativ zu der Rotationsachse vollführt. Der Schwingungsdämpfer umfasst einen Antrieb (z.B. Elektromotor, Elektromotor und Getriebe), mit dem die Bewegung der Dämpfermasse relativ zu dem Rahmen angetrieben wird.

Die Dämpfermasse kann sich entlang einer Kreisbahn bewegen, in deren Mittelpunkt die Rotationsachse angeordnet ist. Zwischen der Rotationsachse und der Dämpfermasse kann sich ein Lenkarm erstrecken, der die Kreisbewegung der Dämpfermasse führt. Im Nutzzustand des Schwingungsdämpfers kann die Rotationsachse sich parallel zu der Zentralachse des Turms erstrecken. Der Abstand zwischen der Dämpfermasse und der Rotationsachse kann beispielsweise zwischen 0,5 m und 1 m liegen. Der Abstand zwischen der Dämpfermasse und der Rotationsachse kann einstellbar sein, beispielsweise indem der Lenkarm mit einem Teleskopmechanismus versehen ist. Die Dämpfermasse kann beispielsweise eine Masse zwischen 50 kg und 100 kg haben. Die Masse der Dämpfermasse kann einstellbar sein, beispielsweise indem verschiedene Gewichtsstücke bereitgestellt werden, die wahlweise verwendet werden, oder indem die Dämpfermasse abtrennbare Teilgewichte aufweist.

In einer Ausführungsform umfasst der Schwingungsdämpfer eine erste Dämpfermasse und eine zweite Dämpfermasse, wobei der Schwingungsdämpfer dazu ausgelegt ist, jede der Dämpfermassen auf die beschriebene Weise relativ zu dem Rahmen zu bewegen. Die Rotationsachse der ersten Dämpfermasse kann parallel zu der Rotationsachse der zweiten Dämpfermasse sein. Insbesondere kann die Rotationsachse der ersten Dämpfermasse koaxial zu der Rotationsachse der zweiten Dämpfermasse sein. Die erste Dämpfermasse und die zweite Dämpfermasse können mit einander entgegengesetztem Drehsinn angetrieben werden. Möglich sind auch Gestaltungen, bei denen der Schwingungsdämpfer drei oder mehr Dämpfermassen umfasst. In einem solchen Fall können alle Schwingungsdämpfer unabhängig voneinander angetrieben sein. Möglich ist auch, dass Dämpfermassen miteinander gekoppelt sind, beispielsweise mechanisch oder elektrisch.

Der Schwingungsdämpfer kann eine Steuerung umfassen, so dass die Bewegung der Dämpfermassen in Abhängigkeit von dem Schwingungszustand des Turms angesteuert wird. In der Steuerung kann eine Information über den Schwingungszustand des Turms verarbeitet werden, um die Dämpfermasse so anzutreiben, dass sie der Schwingung des Turms entgegenwirkt. Der Schwingungsdämpfer kann einen Sensor umfassen, mit dem eine Information über den Schwingungszustand des Turms gewonnen wird. Möglich ist auch, dass der Schwingungszustand des Turms eine Eingangsinformation ist, die dem Schwingungsdämpfer zugeführt wird. Der Schwingungsdämpfer kann mit einer Schutzabdeckung versehen sein, um einen unbeabsichtigten Kontakt mit den Dämpfermassen zu verhindern.

Im Nutzzustand kann der Schwingungsdämpfer im Innenraum des Turms angeordnet sein. Es kann eine starre (und lösbare) Verbindung zwischen dem Rahmen des Schwingungsdämpfers und dem Strukturbauteil des Turms vorgesehen sein, durch die der Schwingungsdämpfer in Position gehalten wird. Die Rotationsachse der Dämpfermasse kann mit der Zentralachse des Turms zusammenfallen. Um genügend Raum für andere Montagearbeiten zulassen, kann alternativ der Schwingungsdämpfer im Nutzzustand exzentrisch innerhalb des Turms angeordnet sein. Insbesondere kann der Schwingungsdämpfer im Nutzzustand so angeordnet sein, dass ein von der Dämpfermasse überstrichener Kreis die Zentralachse des Turms nicht schneidet. In einer Ausführungsform ist der Schwingungsdämpfer im Nutzzustand mit der Wand des Turms verbunden. Das Strukturbauteil des Turms kann beispielsweise mit Stehbolzen versehen sein, an denen der Schwingungsdämpfer angeschraubt werden kann. In einer Ausführungsform ist das Strukturbauteil das oberste Turmsegment eines Turms, der aus mehreren übereinander angeordneten Turmsegmenten zusammengesetzt ist.

Der Kippvorgang, mit dem der Schwingungsdämpfer von dem Nutzzustand in den Transportzustand gebracht wird, wird durchgeführt, bevor der Schwingungsdämpfer aus dem Turm entfernt wird, insbesondere bevor der Schwingungsdämpfer innerhalb des Turms nach oben angehoben wird oder nach unten abgelassen wird. Der Kippwinkel, über den sich die Kippbewegung des Schwingungsdämpfers zwischen dem Nutzzustand und dem Transportzustand erstreckt, kann größer sein als 45°, vorzugsweise größer sein als 70°, weiter vorzugsweise größer sein als 85°. Normalerweise wird der Kippwinkel nicht größer sein als 100°. Die Kippachse, relativ zu der die Kippbewegung stattfindet, kann eine Achse sein, die mit der Rotationsachse der Dämpfermasse einen Winkel von wenigstens 45°, vorzugsweise wenigstens 70°, weiter vorzugsweise wenigstens 85° einschließt. Insbesondere kann die Kippachse eine horizontale Achse sein.

Um das Durchführen der Kippbewegung zu erleichtern, kann der Rahmen des Schwingungsdämpfers ein Gehäuseteil und ein relativ zu dem Gehäuseteil schwenkbares Rahmenteil umfassen. Das Rahmenteil kann im Nutzzustand mit dem Strukturbauteil des Turms verbunden sein, um den Schwingungsdämpfer in Position zu halten. Um den Schwingungsdämpfer vom Nutzzustand in den Transportzustand zu bringen, kann das Gehäuseteil relativ zu dem Rahmenteil geschwenkt werden, während das Rahmenteil noch mit dem Turm verbunden ist. Das Gehäuseteil kann von unten abgestützt werden, so dass die Gewichtskraft des Schwingungsdämpfers zu einem überwiegenden Teil über das Gehäuseteil abgeleitet wird. Es kann dann das Rahmenteil von dem Turm gelöst und ebenfalls nach unten geschwenkt werden. Die dabei zu bewegende Masse ist deutlich reduziert.

Möglich ist auch ein umgekehrter Ablauf, bei dem zunächst das Gehäuseteil mit dem Strukturbauteil des Turms verbunden bleibt und das schwenkbare Rahmenteil nach unten gekippt wird. In einem nachfolgenden Schritt kann das Gehäuseteil von dem Turm gelöst werden und ebenfalls nach unten gekippt werden.

Der Schwingungsdämpfer kann so gestaltet sein, dass er im Transportzustand einen stabilen Stand auf einer ebenen Fläche hat. Der Rahmen des Schwingungsdämpfers kann mit Rollen versehen sein, sodass der Schwingungsdämpfer auf der ebenen Fläche mit geringem Kraftaufwand bewegt werden kann. Die Rollen können an dem Gehäuseteil und/oder an dem Rahmenteil des Rahmens angeordnet sein. Als Gehäuseteil wird dasjenige Teil des Rahmens bezeichnet, in dem die Dämpfermasse gelagert ist. Das Rahmenteil kann so gestaltet sein, dass es das Gehäuseteil von außen umfasst.

Ein Schwingungsdämpfer mit einem Gehäuseteil und einem relativ zu dem Gehäuseteil schwenkbaren Rahmenteil kann bei bestehenden Anlagen nachgerüstet werden, um dort zur Reduzierung von Ermüdungslasten und damit zur Verlängerung der Lebensdauer beizutragen.

Um den in den Transportzustand gebrachten Schwingungsdämpfer aus dem Turm zu entfernen, ist zunächst eine Bewegung nach oben oder nach unten erforderlich. Nach oben hin kann der Schwingungsdämpfer in den Innenraum der Gondel angehoben werden. Dazu kann ein Bordkran verwendet werden. In einem nachfolgenden Schritt kann der Schwingungsdämpfer außerhalb des Turms nach unten abgelassen werden. Auch dafür kann der Bordkran verwendet werden. Um den Schwingungsdämpfer von dem Turm in die Gondel zu bringen, muss regelmäßig eine Öffnung in Form einer Luke oder eines Ausschnitts im Boden der Gondel durchquert werden. Im Transportzustand sollte der Schwingungsdämpfer in seiner horizontalen Dimension so bemessen sein, dass er durch die Öffnung hindurchpasst.

Zum Ablassen des Schwingungsdämpfers nach unten kann eine in dem Turm angeordnete Befahranlage verwendet werden. Im Transportzustand sollte der Schwingungsdämpfer in seiner horizontalen Dimension so bemessen sein, dass er in den Fahrkorb der Befahranlage passt. In seiner vertikalen Dimension sollte der Schwingungsdämpfer so bemessen sein, dass er durch eine Zugangsöffnung des Fahrkorbs passt.

Als horizontale Flächendimension eines Schwingungsdämpfers wird die Fläche bezeichnet, die durch Projektion des Schwingungsdämpfers in eine horizontale Ebene entsteht. Die horizontale Flächendimension des Schwingungsdämpfers kann im Transportzustand um mindestens 10 %, vorzugsweise um mindestens 20 %, weiter vorzugsweise um mindestens 40 % kleiner sein als im Nutzzustand. Im Nutzzustand ist eine große horizontale Flächendimension von Vorteil, weil die Wirkung eines Schwingungsdämpfers im Allgemeinen desto größer ist, je größer der horizontale Bewegungsbereich der Dämpfermasse ist.

Für einen einfachen Transport des Schwingungsdämpfers im Transportzustand ist es von Vorteil, wenn der Schwingungsdämpfer im Transportzustand innerhalb eines Quaders aufgenommen werden kann, dessen Abmessungen die nachfolgenden Bedingungen einzeln oder in Kombination erfüllen. Die Höhe des Quaders ist kleiner als 240 cm, vorzugsweise kleiner als 190 cm. Die Breite des Quaders ist kleiner als 70 cm, vorzugsweise kleiner als 50 cm. Die Tiefe des Quaders ist kleiner als 120 cm, vorzugsweise kleiner als 90 cm. Die Dämpfermassen und/oder die Lenkarme können lösbar mit dem Rahmen des Schwingungsdämpfers verbunden sein. In einer Ausführungsform sind die Dämpfermassen und/oder die Lenkarme im Transportzustand von dem Rahmen des Schwingungsdämpfers gelöst und werden in einem separaten Vorgang aus dem Turm abtransportiert.

Der Turm der Windenergieanlage kann aus einer Mehrzahl von übereinander angeordneten Turmsegmenten zusammengesetzt sein. Der Schwingungsdämpfer kann im Nutzzustand mit einem der Turmsegmente, insbesondere mit dem obersten Turmsegment verbunden sein. Die Montage des Schwingungsdämpfers in dem Turmsegment kann erfolgen, bevor das Turmsegment auf den Turm aufgesetzt ist.

Das Turmsegment kann während der Montage des Schwingungsdämpfers in einer liegenden Position angeordnet sein. Liegende Position bedeutet, dass die Zentralachse des Turmsegments im Wesentlichen horizontal ausgerichtet ist. Die Winkelposition des Turmsegments kann so gewählt sein, dass der Wandabschnitt unten angeordnet ist, in dem der Schwingungsdämpfer montiert wird. In dem Turmsegment kann ein Montageelement für die Montage des Schwingungsdämpfers angeordnet sein. Das Montageelement kann gegenüber der Wand des Turmsegments vorspringen, so dass der Rahmen des Schwingungsdämpfers im Nutzzustand einen Abstand zu der Wand des Turmsegments hat. Dies kann dazu beitragen, den Bewegungsbereich der Dämpfermasse zu vergrößern.

In einem dem Montageelement gegenüberliegenden Wandabschnitt des Turmsegments kann ein Haltepunkt für einen Seil-/Kettenzug vorgesehen sein. Mit einem an dem Haltepunkt aufgehängten Seil-/Kettenzug kann der Schwingungsdämpfer angehoben werden, um ihn in die richtige Position relativ zu dem Montageelement zu bringen.

Für den Transport des Schwingungsdämpfers in den Innenraum des Turmsegments hinein, können beispielsweise ein Wagen, ein Rollensystem und/oder ein Schienensystem vorgesehen sein. In dem Turmsegment kann eine Plattform ausgebildet sein, die im fertig errichteten Zustand des Turms horizontal ausgerichtet ist. Die Plattform kann eine Ausstiegsplattform der Befahranlage bilden, so dass eine Person, die in der Befahranlage nach oben fährt, beim Ausstieg auf die Plattform tritt. Von der Plattform kann eine Leiter (ggf. über eine oder mehrere weitere Plattformen) in den Innenraum der Gondel führen. Auf der Plattform kann der Schwingungsdämpfer bei der späteren Demontage abgestützt werden.

Nachdem der Schwingungsdämpfer in dem Turmsegment montiert wurde, kann das Turmsegment in eine aufrechte Position gekippt werden. Mit einem Großkran kann das Turmsegment angehoben werden und auf das darunterliegende Turmsegment aufgesetzt werden. Der Schwingungsdämpfer kann an eine Spannungsversorgung angeschlossen werden und in Betrieb genommen werden. Der Schwingungsdämpfer kann so ausgelegt sein, dass er automatisch aktiv wird, wenn der Turm in Schwingung gerät. Der Schwingungsdämpfer kann automatisch wieder inaktiv werden, wenn die Schwingung des Turms wieder aufgehört hat.

Die Erfindung betrifft außerdem ein Montagesystem, umfassend einen Turm einer Windenergieanlage und einen Schwingungsdämpfer. Der Schwingungsdämpfer ist in einem Nutzzustand mit einem Strukturbauteil des Turms verbunden, so dass eine Dämpfermasse des Schwingungsdämpfers in eine Bewegung versetzt werden kann, um eine Schwingung des Turms zu dämpfen. In einem Transportzustand ist der Schwingungsdämpfer in einer relativ zu dem Nutzzustand gekippten Stellung auf einer Plattform der Windenergieanlage abgestützt. Als Plattform in diesem Sinne wird ein Strukturbauteil des Turms bezeichnet, auf dem der Schwingungsdämpfer sich nach unten abstützen kann. Die Plattform kann eine Ausstiegsplattform sein, die am oberen Ende einer Befahranlage angeordnet ist.

Das Montagesystem kann mit weiteren Merkmalen fortgebildet werden, die im Zusammenhang des erfindungsgemäßen Montageverfahrens beschrieben sind. Das Montageverfahren kann mit weiteren Merkmalen fortgebildet werden, die im Zusammenhang des erfindungsgemäßen Montagesystems beschrieben sind.

Die Erfindung wird nachfolgend unter Bezugnahme auf die beigefügten Zeichnungen anhand vorteilhafter Ausführungsformen beispielhaft beschrieben. Es zeigen:

Fig. 1: eine Seitenansicht einer Windenergieanlage;

Fig. 2: einen ersten Zwischenzustand bei der Errichtung des Turms der Windenergieanlage aus Fig. 1;

Fig. 3: einen zweiten Zwischenzustand bei der Errichtung des Turms der Windenergieanlage aus Fig. 1;

Fig. 4: einen erfindungsgemäßen Schwingungsdämpfer im Nutzzustand;

Fig. 5: eine schematische Darstellung der Funktionsweise des Schwingungsdämpfers aus Fig. 4;

Fig. 6: den Schwingungsdämpfer aus Fig. 4 im Transportzustand;

Fig. 7: den Schwingungsdämpfer gemäß Fig. 6 aus einer anderen Perspektive;

Fig. 8: eine andere Ausführungsform eines erfindungsgemäßen Schwingungsdämpfers im Transportzustand;

Fig. 9-12: mehrere Schritte beim Übergang zwischen dem Nutzzustand und dem Transportzustand des erfindungsgemäßen Schwingungsdämpfers.

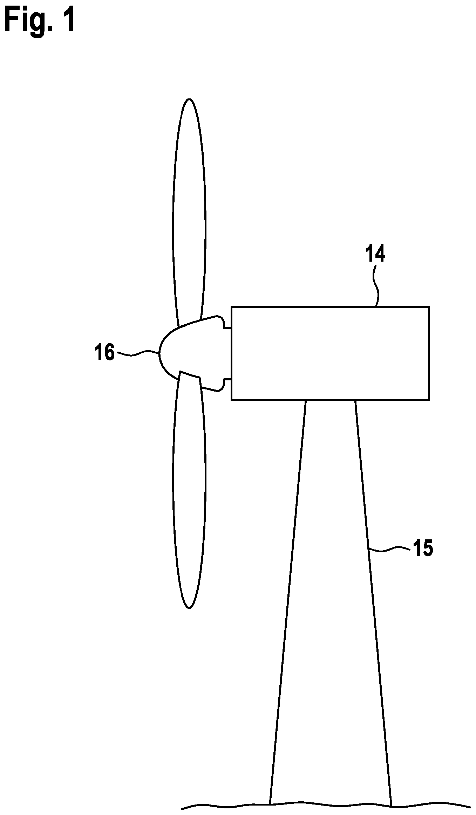

Bei einer in Fig. 1 gezeigten Windenergieanlage ist eine Gondel 14 drehbar auf einem Turm 15 angeordnet. Die Gondel trägt einen Rotor 16, der durch den Wind in Drehung versetzt wird. Der Rotor 16 treibt über eine Rotorwelle einen Generator an, um elektrische Energie zu erzeugen. Die elektrische Energie wird über einen Umrichter und einen Transformator in ein windparkinternes Netz geleitet und von dort in ein elektrisches Übertragungsnetz eingespeist.

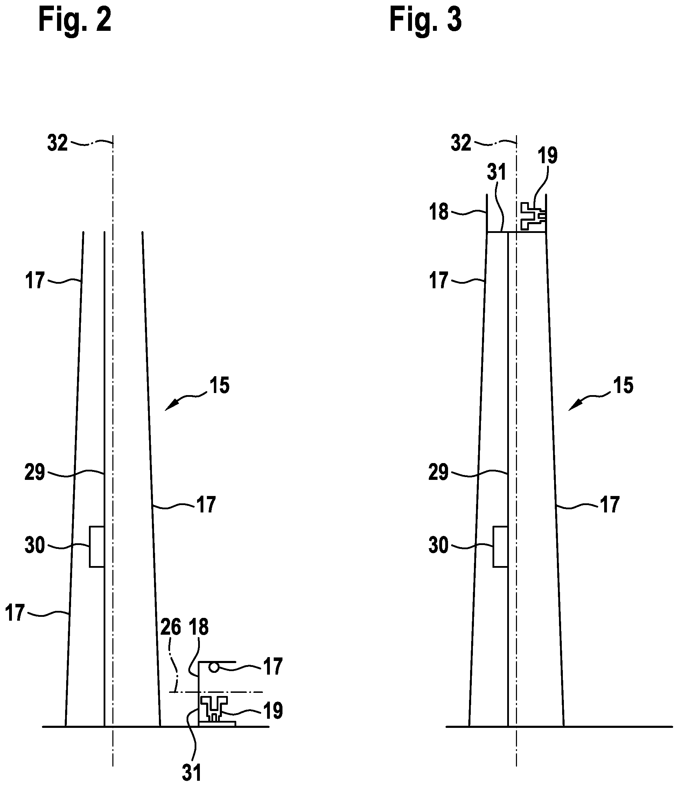

Beim Errichten einer solchen Windenergieanlage wird gemäß Fig. 2 zunächst der Turm 15 aufgestellt, indem mehrere Turmsegmente 17 übereinander angeordnet werden. Der Turm 15 ist so ausgelegt, dass er ohne übermäßige Schwingungen stabil steht, wenn das Gewicht der Gondel 14 auf dem oberen Ende des Turms 15 lastet. In dem Zwischenzustand, in dem der Turm 15 steht, ohne dass das obere Ende ein großes Gewicht trägt, besteht die Gefahr, dass der Turm 15 durch den Wind in Schwingungen versetzt wird. Gemäß der Erfindung ist in dem obersten Turmsegment 18 des Turms 15 ein Schwingungsdämpfer 19 angeordnet, der dazu ausgelegt ist, die Schwingungen des Turms 15 zu dämpfen, so dass der Turm 15 auch ohne die Gondel 14 vor übermäßigen Schwingungen geschützt ist.

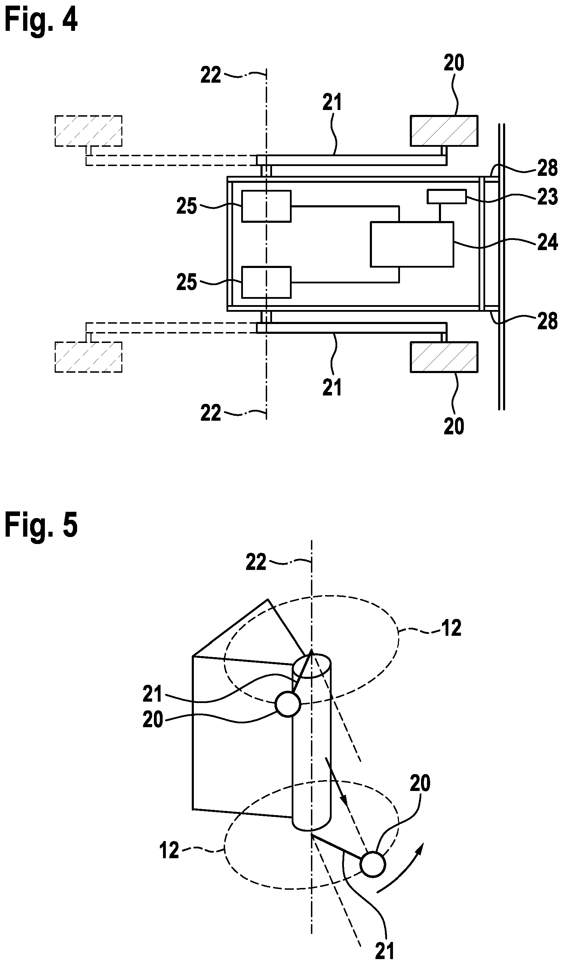

Das Grundprinzip des Schwingungsdämpfers 19 ist in Fig. 4 dargestellt. Der Schwingungsdämpfer 19 ist ein aktives System und besteht aus zwei durch jeweils einen Motor (oder einen Motor mit Getriebe) angetriebenen, exzentrisch gelagerten, um- und gegenlaufenden Dämpfermassen 20 (Unwuchten), die über einen Lenkarm 21 in einem konstanten Abstand zu einer gemeinsamen Rotationsachse 22 gehalten werden. Die Ebenen, in denen sich die beiden Dämpfermassen 20 bewegen, liegen parallel zu einander. Die durch die Bewegung der Dämpfermassen 20 entstehenden Kräfte werden zur Dämpfung der wirbelinduzierten Turmschwingungen genutzt. Bei einer konstanten Drehgeschwindigkeit ω der Dämpfermassen 20 entsteht eine harmonische Dämpfungskraft $F_c$ mit der Amplitude

$$F_c = 2 \cdot m_c \cdot r_c \cdot \omega^2.$$

Dabei bezeichnet $m_c$ die Masse einer Dämpfermasse 20 und $r_c$ den radialen Abstand zwischen der Dämpfermasse 20 und der Rotationsachse 22.

Gemäß Fig. 4 werden die Turmschwingungen mit Sensoren 23 gemessen und die Schwingrichtung und -frequenz in einer Steuereinheit 24 identifiziert. Darauf basierend berechnet die Steuereinheit 24 Stellgrößen für die Elektromotoren 25, mit denen die Drehbewegung der Dämpfermassen 20 angetrieben wird. Zu den Stellgrößen der Elektromotoren gehört insbesondere die Motorgeschwindigkeit ω. Das System arbeitet nach Inbetriebsetzung selbstständig. Der Abstand zwischen den Dämpfermassen 20 und der Rotationsachse 22 kann beispielsweise zwischen 0,5 m und 1 m liegen, die Dämpfermassen können beispielsweise eine Masse zwischen 50 kg und 150 kg haben.

Im Nutzzustand ist der Schwingungsdämpfer 19, wie in Fig. 3 gezeigt, mit der Turmwand verbunden und ragt in den Innenraum des Turms 15 hinein. Die Montage des Schwingungsdämpfers 19 in dem obersten Turmsegment 18 erfolgt gemäß Fig. 2 während das oberste Turmsegment 18 noch auf dem Erdboden liegt. Das oberste Turmsegment 18 ist in einer liegenden Position, in der die Zentralachse 26 des Turmsegments 18 im Wesentlichen horizontal ausgerichtet ist. Der Wandabschnitt, mit dem der Schwingungsdämpfer 19 verbunden wird, weist in der Darstellung gemäß Fig. 2 nach unten. In der Praxis kann auch eine andere Winkelposition des Turmsegments zweckmäßig sein.

Mit einem leitergeführten Rollwagen wird der Schwingungsdämpfer 19 in den Innenraum des Turmsegments 18 gefahren. Mit einem Flaschenzug, der an einem Haltepunkt 27 befestigt wird, wird der Schwingungsdämpfer 19 angehoben und in eine aufrechte Position gebracht, so dass er mit den in der Turmwand ausgebildeten Montageelementen 28 verbunden werden kann.

Nachdem der Schwingungsdämpfer 19 mit dem Turmsegment 18 verbunden ist, wird das Turmsegment 18 mit einem Großkran in eine aufrechte Position gebracht, zum oberen Ende des Turms 15 angehoben und auf die schon errichteten Turmsegmente 17 aufgesetzt. Wenn das Turmsegment 18 fest verbunden ist, wird der Schwingungsdämpfer 19 an eine Spannungsversorgung angeschlossen und damit in den aktiven Zustand gebracht. Sobald Schwingungen in dem Turm 15 auftreten, werden die Dämpfermassen 20 in Bewegung versetzt, um die Schwingungen zu dämpfen.

Der Turm 15 umfasst eine Befahranlage 29 mit einem Fahrkorb 30, der zwischen dem Turmfuß und einer Plattform 31 am oberen Ende des Turms 15 fährt. Der Schwingungsdämpfer 19 ist so angeordnet und bemessen, dass ein gefahrloser Ausstieg auf die Plattform 31 möglich ist, auch wenn der Schwingungsdämpfer 19 in Betrieb ist und die Dämpfermassen 20 sich bewegen. Insbesondere schneidet der durch die Bewegung der Dämpfermassen 20 überstrichene Kreis 12 nicht die Zentralachse 32 des Turms 15. Gegebenenfalls kann der Schwingungsdämpfer 19 mit einer Schutzabdeckung versehen sein, durch die ein unbeabsichtigter Kontakt mit den Dämpfermassen 20 verhindert wird.

Sobald der Windenergieanlagenkopf mit der Gondel 14 und dem Rotor 16 montiert ist, ist der Schwingungsdämpfer 19 nicht mehr erforderlich, um den Turm 15 in einem stabilen Zustand ohne übermäßige Schwingungen zu halten. Der Schwingungsdämpfer 19 kann außer Betrieb gesetzt und demontiert werden.

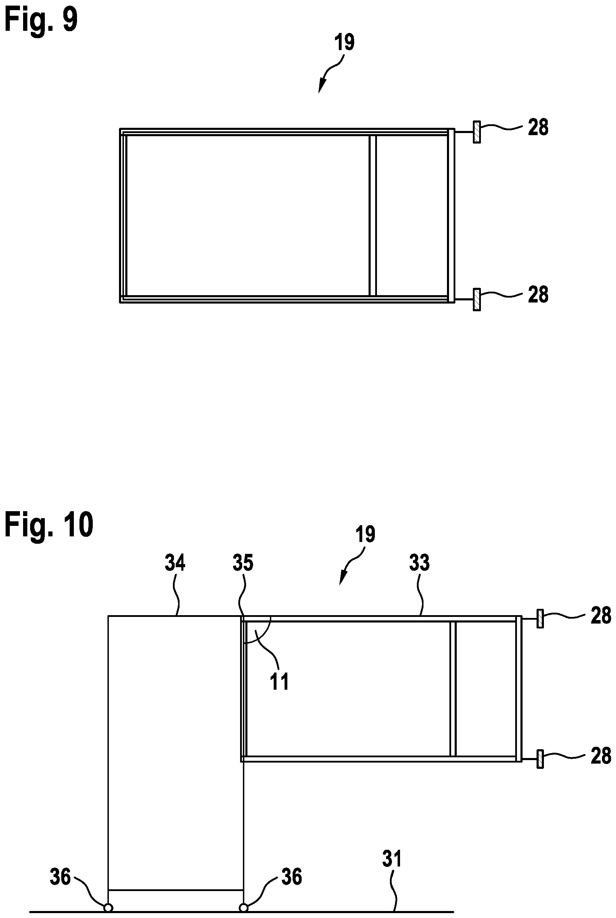

Die Schritte bei der Demontage des Schwingungsdämpfers 19 werden anhand der Fig. 9 bis 12 erläutert. Die Fig. 9 zeigt einen Zustand, in dem der Schwingungsdämpfer 19 an den Montageelementen 28 des Turmsegments 18 aufgehängt ist und in dem die Dämpfermassen 20 sowie die Lenkarme 21 demontiert sind. Ziel ist es, den Schwingungsdämpfer 19 ohne Unterstützung eines externen Krans auf die Plattform 31 des obersten Turmsegments 18 zu stellen.

Der Rahmen des Schwingungsdämpfers 19 umfasst ein Gehäuseteil 34 und ein Rahmenteil 33, die um eine Schwenkachse 35 schwenkbar relativ zueinander gelagert sind. Das Gehäuseteil 34 bildet ein Gehäuse, innerhalb dessen die technischen Komponenten des Schwingungsdämpfers 19, wie beispielsweise die Motoren 25 und die Steuereinheit 24 aufgenommen sind. Das Schwenkteil 33 umgibt in Fig. 9 das Gehäuseteil 34 von zwei Seiten und schließt das Gehäuseteil 34 zwischen sich ein.

Mit einer Schwenkbewegung kann das Gehäuseteil 34 in die aufrechte Position gemäß Fig. 10 geschwenkt werden, während das Rahmenteil 33 weiterhin mit dem Turmsegment 18 verbunden ist. Das Gehäuseteil 34 ist an seinem unteren Ende mit Rollen 36 versehen, die auf der Plattform 31 stehen, wenn das Gehäuseteil 34 in die aufrechte Position gebracht wurde.

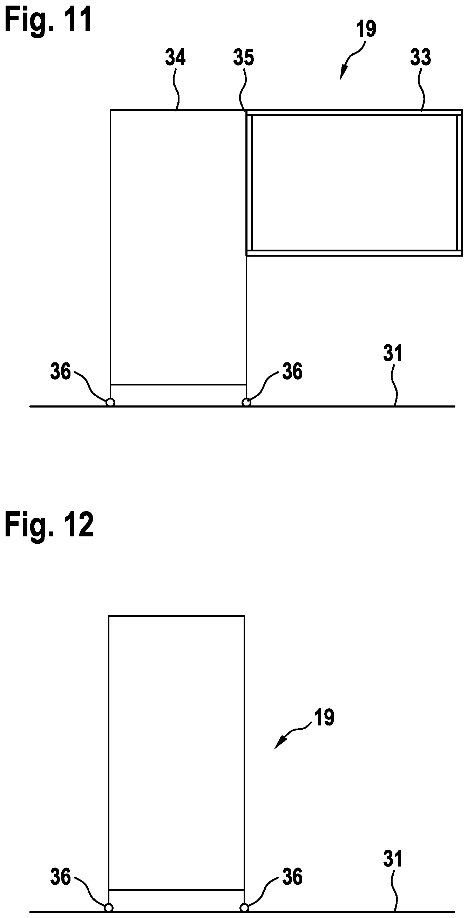

Wenn das Gehäuseteil 34 stabil auf der Plattform 31 steht, kann die Verbindung zwischen dem Rahmenteil 33 und den Montageelementen 28 des Turmsegments 18 gelöst werden. Ein zu den Montageelementen 28 benachbarter Teil des Rahmenteils 33 wird eingeklappt, so dass die horizontale Erstreckung des Rahmenteils 33 kleiner ist als die Höhe des Gehäuseteils 34, siehe Fig. 11. Mit einem Schwenkvorgang wird das Rahmenteil 33 nach unten gekippt, so dass das Gehäuseteil 34 wieder innerhalb des Rahmenteils 33 aufgenommen ist. Die Fig. 12 zeigt den Schwingungsdämpfer 19 im Transportzustand. Der Schwingungsdämpfer 19 kann auf der Plattform 31 in den Fahrkorb 30 der Befahranlage 29 geschoben werden und zum Fußende des Turms 15 gefahren werden. Der Schwingungsdämpfer 19 ist dann bereit zur Verwendung bei der Errichtung einer weiteren Windenergieanlage.

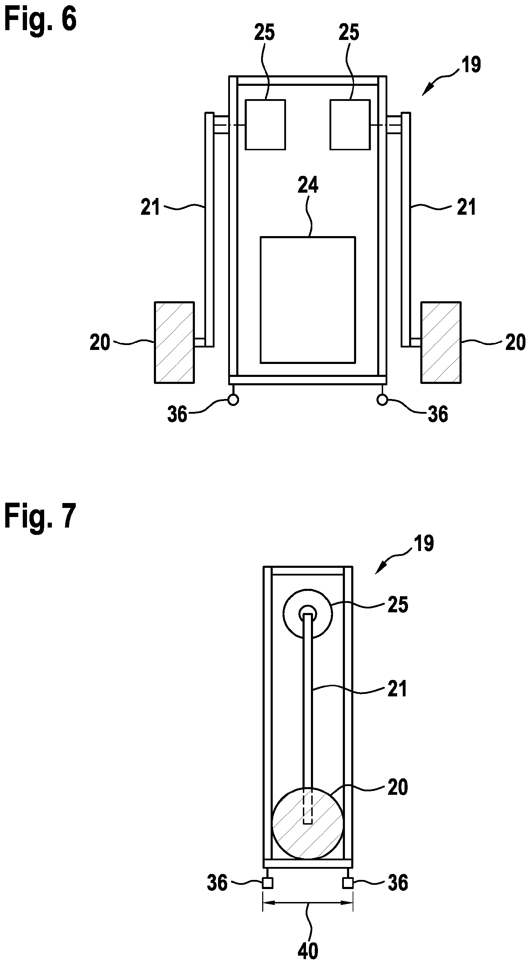

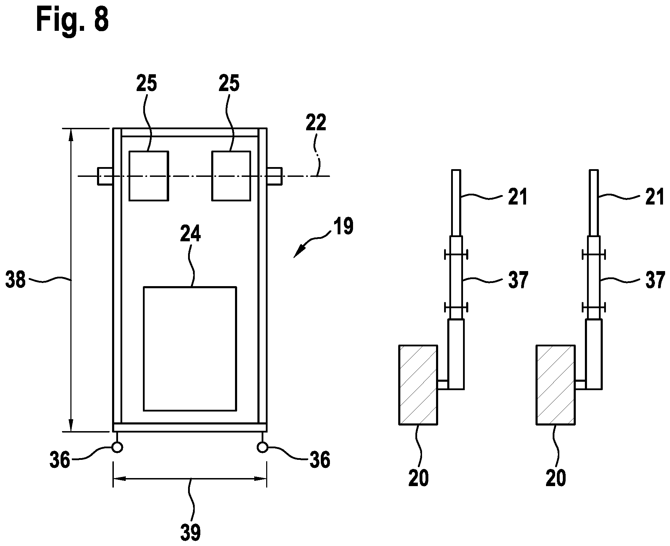

In den Fig. 6 und 7 ist eine Ausführungsform dargestellt, bei der die Dämpfermassen 20 sowie die Lenkarme 21 erst im Anschluss an den Kippvorgang von dem Rahmen des Schwingungsdämpfers 19 gelöst werden. Bei der alternativen Ausführungsform gemäß Fig. 8 sind die Lenkarme 21 mit einem Teleskopmechanismus 37 ausgestattet. Über den Teleskopmechanismus 37 kann der Abstand zwischen den Dämpfermassen 20 und der Rotationsachse 22 des Schwingungsdämpfers 19 abhängig vom Anwendungsfall passend eingestellt werden.

In dem gezeigten Ausführungsbeispiel ist der Schwingungsdämpfer 19 so gestaltet, dass im Transportzustand die Höhe 38 nicht größer ist als 180 cm, dass die Breite 39 nicht größer ist als 80 cm und dass die Tiefe 40 nicht größer ist als 45 cm. Mit diesen Abmessungen ist der Schwingungsdämpfer 19 geeignet für einen Transport in dem Fahrkorb 30 der Befahranlage 29.

Alternativ zum Transport in der Befahranlage 29 ist es auch möglich, einen in der Gondel 14 angeordneten Bordkran zu verwenden, um den Schwingungsdämpfer 19 im Inneren des Turms 15 nach unten abzulassen. Dazu wird der Bordkran oberhalb des Schwingungsdämpfers 19 positioniert, der Schwingungsdämpfer 19 leicht angehoben, eine Luke in der Plattform 31 geöffnet und der Schwingungsdämpfer 19 abgelassen.

Gemäß einer weiteren Alternative kann der Schwingungsdämpfer 19 mit dem Bordkran in den Innenraum der Gondel 14 angehoben werden und durch eine Öffnung im Boden der Gondel 14 außerhalb des Turms 15 zum Erdboden abgelassen werden.

**Patentansprüche**

1. Demontageverfahren für einen Schwingungsdämpfer (19) eines Turms (15) einer Windenergieanlage, bei dem der Schwingungsdämpfer (19) ausgehend von einem Nutzzustand in einen Transportzustand gebracht wird, wobei der Schwingungsdämpfer (19) im Nutzzustand mit einem Strukturbauteil (18) des Turms (15) verbunden ist, so dass eine Dämpfermasse (20) des Schwingungsdämpfers (19) in eine Bewegung versetzt werden kann, bei der der Abstand zwischen der Dämpfermasse (20) und einer Zentralachse (32) des Turms (15) sich ändert, wobei der Schwingungsdämpfer (19) einen Rahmen umfasst, der im Nutzzustand mit dem Strukturbauteil (18) des Turms (15) verbunden ist, wobei die Dämpfermasse (20) so relativ zu dem Rahmen gelagert ist, dass die Dämpfermasse (20) sich im Betrieb des Schwingungsdämpfers (19) relativ zu dem Rahmen bewegt, und wobei der Schwingungsdämpfer (20) einen Antrieb umfasst, mit dem die Bewegung der Dämpfermasse (20) relativ zu dem Rahmen angetrieben wird, wobei der Schwingungsdämpfer (19) in den Transportzustand gebracht wird, indem der Schwingungsdämpfer (19) relativ zu dem Nutzzustand gekippt wird, bevor der Schwingungsdämpfer (19) aus dem Turm (15) entfernt wird.

2. Demontageverfahren nach Anspruch 1, **dadurch gekennzeichnet, dass** der Schwingungsdämpfer (19) im Nutzzustand von einer Wand des Turms (15) in den Innenraum des Turms (15) ragt.

3. Demontageverfahren nach Anspruch 1 oder 2, **dadurch gekennzeichnet, dass** der Schwingungsdämpfer (19) eine erste Dämpfermasse (20) und eine zweite Dämpfermasse (20) umfasst, wobei die Dämpfermassen (20) dazu ausgelegt sind, sich entlang gegensinniger Kreisbahnen (12) zu bewegen.

4. Demontageverfahren nach einem der Ansprüche 1 bis 3,
**dadurch gekennzeichnet, dass** der Abstand zwischen der Dämpfermasse (20) und einer Rotationsachse (22) einstellbar ist.

5. Demontageverfahren nach einem der Ansprüche 1 bis 4,
**dadurch gekennzeichnet, dass** die Masse der Dämpfermasse (20) einstellbar ist.

6. Demontageverfahren nach einem der Ansprüche 1 bis 5,
**dadurch gekennzeichnet, dass** der Kippwinkel (11), über den sich die Kippbewegung des Schwingungsdämpfers (19) zwischen dem Nutzzustand und dem Transportzustand erstreckt, größer ist als 45°, vorzugsweise größer ist als 70°, weiter vorzugsweise größer ist als 85°.

7. Demontageverfahren nach einem der Ansprüche 1 bis 6,
**dadurch gekennzeichnet, dass** die Kippachse (35) mit der Rotationsachse (22) der Dämpfermasse (20) einen Winkel von wenigstens 45°, vorzugsweise wenigstens 70°, weiter vorzugsweise wenigstens 85° einschließt.

8. Demontageverfahren nach einem der Ansprüche 1 bis 7,
**dadurch gekennzeichnet, dass** der Rahmen des Schwingungsdämpfers (19) ein Gehäuseteil (34) und ein relativ zu dem Gehäuseteil (34) schwenkbares Rahmenteil (33) umfasst.

9. Demontageverfahren nach einem der Ansprüche 1 bis 8,
**dadurch gekennzeichnet, dass** der Rahmen des Schwingungsdämpfers (19) mit Rollen (36) versehen ist.

10. Demontageverfahren nach einem der Ansprüche 1 bis 9,
**dadurch gekennzeichnet, dass** der Schwingungsdämpfer (19) im Transportzustand mit einer Befahranlage (29) des Turms (15) zum Fuß des Turms (15) gefahren wird.

11. Demontageverfahren nach einem der Ansprüche 1 bis 10,
**dadurch gekennzeichnet, dass** der Schwingungsdämpfer (19) mit einem Turmsegment (18) verbunden wird, während das Turmsegment (18) in einem liegenden Zustand ist.

12. Demontageverfahren nach einem der Ansprüche 1 bis 11,
**dadurch gekennzeichnet, dass** das Turmsegment (18) ein Montageelement (28) für den Schwingungsdämpfer (19) und einen dem Montageelement (28) gegenüber liegenden Haltepunkt (27) für einen Seil-/Kettenzug umfasst.

13. Demontagesystem, umfassend einen Turm (15) einer Windenergieanlage und einen Schwingungsdämpfer (19), wobei der Schwingungsdämpfer (19) in einem Nutzzustand mit einem Strukturbauteil (18) des Turms (15) verbunden ist, so dass eine Dämpfermasse (20) des Schwingungsdämpfers (19) in eine Bewegung versetzt werden kann, um eine Schwingung des Turms (15) zu dämpfen, wobei der Schwingungsdämpfer (19) einen Rahmen umfasst, der im Nutzzustand mit dem Strukturbauteil (18) des Turms (15) verbunden ist, wobei die Dämpfermasse (20) so relativ zu dem Rahmen gelagert ist, dass die Dämpfermasse (20) sich im Betrieb des Schwingungsdämpfers (19) relativ zu dem Rahmen bewegt, und wobei der Schwingungsdämpfer (19) einen Antrieb umfasst, mit dem die Bewegung der Dämpfermasse (20) relativ zu dem Rahmen angetrieben wird, und wobei der Schwingungsdämpfer (19) in einem Transportzustand in einer relativ zu dem Nutzzustand gekippten Stellung auf einer Plattform (31) der Windenergieanlage abgestützt ist, bevor der Schwingungsdämpfer (19) aus dem Turm (15) entfernt wird.

## Claims

1. Dismantling method for a vibration damper (19) f a tower (15) of a wind power plant, in the case of which method, starting from a use state, the vibration damper (19) is moved into a transport state, the vibration damper (19) being connected in the use state to a structural component (18) of the tower (15), with the result that a damper mass (20) of the vibration damper (19) can be set in a movement, in the case of which the spacing between the damper mass (20) and a central axis (32) of the tower (15) changes, the vibration damper (19) comprising a frame which is connected to the structural component (18) of the tower (15) in the use state, the damper mass (20) being mounted relative to the frame in such a way that the damper mass (20) moves relative to the frame during operation of the vibration damper (19), and the vibration damper (20) comprising a drive, by way of which the movement of the damper mass (20) relative to the frame is driven, the vibration damper (19) being moved into the transport state by the vibration damper (19) being tilted relative to the use state before the vibration damper (19) is removed from the tower (15).

2. Dismantling method according to Claim 1, **characterized in that** the vibration damper (19) protrudes from a wall of the tower (15) into the interior of the tower (15) in the use state.

3. Dismantling method according to Claim 1 or 2, **characterized in that** the vibration damper (19) comprises a first damper mass (20) and a second damper mass (20), the damper masses (20) being designed to move along circular paths (12) in opposite directions.

4. Dismantling method according to one of Claims 1 to 3, **characterized in that** the spacing between the damper mass (20) and a rotational axis (22) is adjustable.

5. Dismantling method according to one of Claims 1 to 4, **characterized in that** the mass of the damper mass (20) is adjustable.

6. Dismantling method according to one of Claims 1 to 5, **characterized in that** the tilt angle (11), over which the tilting movement of the vibration damper (19) between the use state and the transport state extends, is greater than 45°, preferably greater than 70°, further preferably greater than 85°.

7. Dismantling method according to one of Claims 1 to 6, **characterized in that** the tilting angle (35) encloses an angle with the rotational axis (22) of the damper mass (20) of at least 45°, preferably at least 70°, further preferably at least 85°.

8. Dismantling method according to one of Claims 1 to 7, **characterized in that** the frame of the vibration damper (19) comprises a housing part (34) and a frame part (33) which can be pivoted relative to the housing part (34).

9. Dismantling method according to one of Claims 1 to 8, **characterized in that** the frame of the vibration damper (19) is provide with rollers (36).

10. Dismantling method according to one of Claims 1 to 9, **characterized in that**, in the transport state, the vibration damper (19) is moved to the bottom of the tower (15) by way of a lift system (29) of the tower (15).

11. Dismantling method according to one of Claims 1 to 10, **characterized in that** the vibration damper (19) is connected to a tower segment (18) while the tower segment (18) is in a horizontal state.

12. Dismantling method according to one of Claims 1 to 11, **characterized in that** the tower segment (18) comprises a mounting element (28) for the vibration damper (19) and a holding point (27), lying opposite the mounting element (28), for a cable/chain hoist.

13. Dismantling system, comprising a tower (15) of a wind power plant and a vibration damper (19), the vibration damper (19) being connected to a structural component (18) of the tower (15) in a use state, with the result that a damper mass (20) of the vibration damper (19) can be set in a movement in order to damp a vibration of the tower (15), the vibration damper (19) comprising a frame which is connected to the structural component (18) of the tower (15) in the use state, the damper mass (20) being mounted relative to the frame in such a way that the damper mass (20) moves relative to the frame during operation of the vibration damper (19), and the vibration damper (19) comprising a drive, by way of which the movement of the damper mass (20) relative to the frame is driven, and the vibration damper (19) being supported in a transport state in a position, tilted relative to the use state, on a platform (31) of the wind power plant before the vibration damper (19) is removed from the tower (15).

## Revendications

1. Procédé de démontage pour un amortisseur de vibrations (19) d'une tour (15) d'une installation d'énergie éolienne, dans lequel l'amortisseur de vibrations (19) est amené d'un état d'utilisation à un état de transport, l'amortisseur de vibrations (19) étant, dans l'état d'utilisation, relié à un composant structural (18) de la tour (15), de sorte qu'une masse (20) de l'amortisseur de vibrations (19) puisse être mise en mouvement, mouvement dans lequel la distance entre la masse d'amortisseur (20) et un axe central (32) de la tour (15) change, l'amortisseur de vibrations (19) comprenant un cadre qui, dans l'état d'utilisation, est relié au composant structural (18) de la tour (15), la masse d'amortisseur (20) étant montée par rapport au cadre de telle sorte que la masse d'amortisseur (20) se déplace par rapport au cadre lors du fonctionnement de l'amortisseur de vibrations (19), et l'amortisseur de vibrations (20) comprenant un entraînement à l'aide duquel le mouvement de la masse d'amortisseur (20) par rapport au cadre est entraîné, l'amortisseur de vibrations (19) étant amené dans l'état de transport, par le fait que l'amortisseur de vibrations (19) est incliné par rapport à l'état d'utilisation, avant que l'amortisseur de vibrations (19) ne soit retiré de la tour (15).

2. Procédé de démontage selon la revendication 1, **caractérisé en ce que** l'amortisseur de vibrations (19), dans l'état d'utilisation, fait saillie à partir d'une paroi de la tour (15) dans l'espace intérieur de la tour (15) .

3. Procédé de démontage selon la revendication 1 ou 2, **caractérisé en ce que** l'amortisseur de vibrations (19) comprend une première masse d'amortisseur (20) et une deuxième masse d'amortisseur (20), les masses d'amortisseur (20) étant conçues pour se déplacer le long de trajectoires circulaires (12) inverses.

4. Procédé de démontage selon l'une des revendications 1 à 3, **caractérisé en ce que** la distance entre la masse d'amortisseur (20) et un axe de rotation (22) est réglable.

5. Procédé de démontage selon l'une des revendications 1 à 4, **caractérisé en ce que** la masse de la masse d'amortisseur (20) est réglable.

6. Procédé de démontage selon l'une des revendications 1 à 5, **caractérisé en ce que** l'angle d'inclinaison (11), sur lequel s'étend le mouvement d'inclinaison de l'amortisseur de vibrations (19) entre l'état d'utilisation et l'état de transport, est supérieur à 45°, de préférence est supérieur à 70°, plus préférentiellement est supérieur à 85°.

7. Procédé de démontage selon l'une des revendications 1 à 6, **caractérisé en ce que** l'axe d'inclinaison (35) forme avec l'axe de rotation (22) de la masse d'amortisseur (20) un angle d'au moins 45°, de préférence d'au moins 70°, plus préférentiellement d'au moins 85°.

8. Procédé de démontage selon l'une des revendications 1 à 7, **caractérisé en ce que** le cadre de l'amortisseur de vibrations (19) comprend une partie de boîtier (34) et une partie de cadre (33) pivotante par rapport à la partie de boîtier (34).

9. Procédé de démontage selon l'une des revendications 1 à 8, **caractérisé en ce que** le cadre de l'amortisseur de vibrations (19) est doté de rouleaux (36).

10. Procédé de démontage selon l'une des revendications 1 à 9, **caractérisé en ce que** l'amortisseur de vibrations (19), dans l'état de transport, est déplacé jusqu'au pied de la tour (15) à l'aide d'un système d'accès (29) de la tour (15).

11. Procédé de démontage selon l'une des revendications 1 à 10, **caractérisé en ce que** l'amortisseur de vibrations (19) est relié à un segment de tour (18) pendant que le segment de tour (18) est dans un état couché.

12. Procédé de démontage selon l'une des revendications 1 à 11, **caractérisé en ce que** le segment de tour (18) comprend un élément de montage (28) pour l'amortisseur de vibrations (19) et un point de retenue (27), opposé à l'élément de montage (28), pour un palan à câble/chaîne.

13. Système de démontage, comprenant une tour (15) d'une installation d'énergie éolienne et un amortisseur de vibrations (19), l'amortisseur de vibrations (19) étant, dans un état d'utilisation, relié à un composant structural (18) de la tour (15), de sorte qu'une masse (20) de l'amortisseur de vibrations (19) puisse être mise en mouvement, afin d'amortir une vibration de la tour (15), l'amortisseur de vibrations (19) comprenant un cadre qui, dans l'état d'utilisation, est relié au composant structural (18) de la tour (15), la masse d'amortisseur (20) étant montée par rapport au cadre de telle sorte que la masse d'amortisseur (20) se déplace par rapport au cadre lors du fonctionnement de l'amortisseur de vibrations (19), et l'amortisseur de vibrations (19) comprenant un entraînement à l'aide duquel le mouvement de la masse d'amortisseur (20) par rapport au cadre est entraîné, et l'amortisseur de vibrations (19) étant, dans un état de transport, supporté sur une plate-forme (31) de l'installation d'énergie éolienne dans une position inclinée par rapport à l'état d'utilisation, avant que l'amortisseur de vibrations (19) ne soit retiré de la tour (15).

# Fig. 1

# Fig. 2

# Fig. 3

# Fig. 4

# Fig. 5

# Fig. 6

25  25

19

21  21

24

20  20

36  36

# Fig. 7

19

25

21

20

36  36

40

# Fig. 8

**Fig. 9**

19

28

28

**Fig. 10**

34    35    19    33

28

11

28

36    36    31

**Fig. 11**

34    35         19      33

36    36              31

**Fig. 12**

19

36    36              31

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008145122 A1
- DE 202016005517 U1
- WO 2008071428 A1
- WO 2013017244 A2
- WO 2014040598 A1